Europäisches Patentamt

(19) European Patent Office

Office européen des brevets

(11) Publication number: **0 074 831**
A2

## (12) EUROPEAN PATENT APPLICATION

(21) Application number: 82304798.0

(22) Date of filing: 13.09.82

(51) Int. Cl.³: **H 01 M 2/18**
**H 01 M 10/12**

(30) Priority: 14.09.81 US 301538

(43) Date of publication of application:
23.03.83 Bulletin 83/12

(84) Designated Contracting States:
DE FR GB

(71) Applicant: ESB International Corporation
5 Penn Center Plaza
Philadelphia Pennsylvania 19109(US)

(72) Inventor: Vinkler, John F.
9 Horseshoe Lane
Hatboro Pennsylvania 19040(US)

(74) Representative: Greenstreet, Cyril Henry et al,
Thames House (Fifth floor) Millbank
London SW1P 4QF(GB)

(54) Electric storage batteries and plates therefor.

(57) In an electric storage battery, particularly of the lead-acid type, in which the positive plates are enveloped by a separator in the form of a sleeve, the open top of the sleeve is pinched together over at least part of the plate to alleviate mossing and the sleeve may be secured to the plate to prevent it creeping relative to the plate.

Croydon Printing Company Ltd.

EP 0 074 831 A2

<u>Electric Storage Batteries and Plates Therefor</u>

This invention relates to electric storage batteries and to plates therefor.

Electric storage batteries comprise positive and negative plates spaced alternately in a suitable electrolyte container. A separator is positioned about each positive plate, and a number of positive plates and negative plates are electrically ganged together (positive to positive, negative to negative) to form a cell, two or more parallel, interconnected cells constituting a battery.

The plates of lead-acid batteries may be constructed in various ways. Conventionally the positive plates are in the form of flat grids pasted with active material, but the use of tubular plates has many advantages. In tubular plate batteries the positive plates generally consist of a lead alloy grid having a series of spaced electrically conductive spines appended to an electrically conductive cross member. A porous, rigid sheath envelops each spine to form a hollow tube. Each tube, packed with active material, is sealed at the bottom and connected to an adjoining tube by a second non-conductive cross member. Generally, the negative plates are conventional pasted plates.

Tubular plate batteries generally exhibit higher ratios of electrical capacity-to-weight than similarly sized secondary batteries employing conventional, flat, pasted grids. This is primarily because the tube-type electrode design exposes a substantially greater surface area of active material to the electrolyte contained within the battery. Accordingly, since the electrolyte is free to circulate about and through the tubes, the tubular battery plate is capable of delivering greater energy densities. In addition, because the active material is securely enveloped in a porous but rigid tube sheath, the tubular battery is better protected from the deleterious effects caused by shock and vibration.

In a fully charged battery, all the active material affixed to the positive plates is lead dioxide ($PbO_2$) and that affixed to the negative plates is pure sponge lead (Pb). All the sulphuric acid is in the electrolyte, and the specific gravity is at a maximum. As the battery discharges, some of the sulphuric acid combines with the active materials to form lead sulphate and water. As the battery continues to discharge, additional acid is drawn from the electrolyte to produce additional lead sulphate and water. As this process continues, the specific gravity of the electrolyte gradually diminishes since the ratio of sulphuric acid to water decreases.

When a battery is recharged, the reverse action takes place. The acid in the sulphated active material of the plate is driven out and back into the electrolyte. This return of acid to the electrolyte reduces the sulphate in the plates and increases the specific gravity of the electrolyte. The specific gravity will continue to rise until all the acid is driven out of the plates. After the acid has been returned to the electrolyte, the specific gravity of the battery will have reached its maximum level. The material of the positive plates is again lead dioxide, that of the negative plates is sponge lead and the specific gravity is at a maximum. In a nutshell, on discharge the plates absorb acid and on charge they return the acid absorbed back to the electrolyte.

As with all lead-acid batteries, tubular plate batteries are prone to mossing. This term is employed to describe the deposition of a sponge-like layer of lead on the negative plates, straps and lugs. This material was originally shed from the positive plates during charging. As the positive plate cycles, small quantities of lead are dissolved into the electrolyte. As the lead circulates throughout the cell and comes into contact with the plates, it tends to precipitate (or plate) on to the closest grid available, where it is converted to the active material of that particular plate. Lead plating on the positive plate remains non-cohesive in nature and will tend to slough off during the subsequent recharging periods. The lead that plates out on to the negative plate is, however, cohesive in nature and thus adheres to and accumulates on the plates. As this continues, the redeposited lead forms dendrites and may, if left unchecked, bridge the space between the positive and negative plates causing a partial short circuit. The accumulation of moss is usually an indication of overcharging or excessively high charging currents.

In current tubular plate battery designs the separator, usually made from a synthetic microporous material (e.g. polypropylene) to facilitate electrolyte flow, envelopes a substantial portion of the positive plate. The separator, shaped like an open sleeve having closed sides closed but open ends, is slipped over the plate. The bottom of the sleeve is disposed flush with the base of the grid and the top of the sleeve is positioned to allow the plate lug to protrude.

According to the invention, mossing is alleviated by pinching together at least part of the open top of the separator sleeve. immediately above the upper edge of the positive plates, advantageously in the vicinity of the lugs of adjacent negative plates. The pinching is preferably effected by pinch welding.

Another problem facing batteries is that posed by the physical movement of the separator. Batteries that are subject to vibration, rough handling and movement (for example, batteries installed in electric forklift vehicles or mining vehicles) may bounce in their carriers.   Owing to the flexibility of the separator material, the separator tends to creep upwards and bunch up.   This creates localized dead areas, which tend to inhibit electrolyte flow and cause localized action.   As a consequence, the grids may experience localized damage, and the possibility of short circuits between the positive and negative plates increases.

According to another feature of the invention, the separator is permanently registered against the plate to prevent the upward creep of the sleeve.

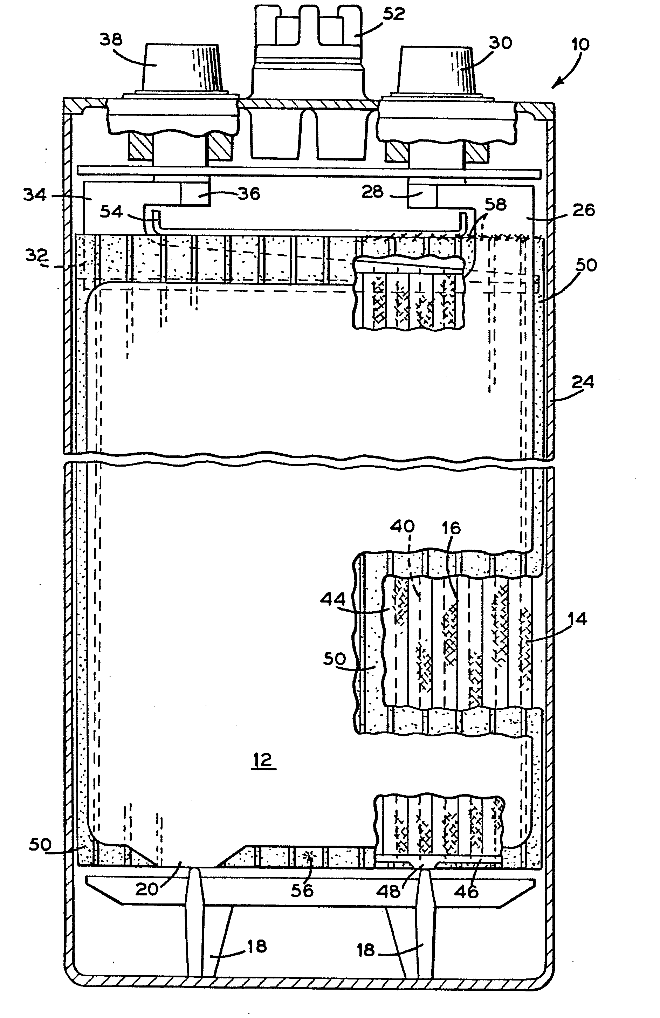

A preferred embodiment of the invention, as applied to tubular plate batteries, will now be described by way of example with reference to the accompanying drawing which is a cross-sectional partially cut-away elevation of a cell employing the invention.

As shown in the drawing, a battery 10 comprises pasted grid, negative plates 12 and positive tubular plates 14 housed in a battery case 24.   Each negative plate 12 is supported in the battery case 24 on stand-offs 18 by feet 20, of which only one is shown. A connecting lug 26 projects from the top of each negative plate, and a strap 28 electrically gangs together the negative plates 12 within a particular cell and connects them to the negative terminal 30.

Each positive tubular plate 14 includes an electrically conductive cross member 32 and a connection lug 34.   As with the negative plate 12, a strap 36 electrically gangs together the positive plates 14 disposed within the cell and connects them to the positive terminal 38.

A row of electrically conductive spines 40 extend downwards from the cross member 32, and a porous, rigid sheath 44 envelopes each spine 40 to form a tube 16.   Active material is packed into the tubes 16.

An electrically insulating cross member 46 is affixed to the tubes 16.    Feet 48, of which only one is shown, support the plate 14 above the stand-off 18. The cross member 46 may be made from a suitable polymer such as polypropylene.

A vent plug 52 permits the addition of water to the cell 10.  A battery separator protector and splash shield 54 disposed above the plates 12 and 14 protects the internal parts of the battery from damage that may be caused by the insertion of a hydrometer.

The positive plate 14 is enveloped by a separator 50, folded or closed along its longitudinal sides and open at the top and bottom to form a sleeve, which is slipped over the positive plate 14. The sleeve 50 is sized to allow the lug 34 to protrude vertically from the enveloped plate 14 to make contact with the strap 36.

A portion of the upper section of the sleeve 50 is attached to itself at location 58 by pinch welds (indicated in the drawing by a row of crosses) in the vicinity of the negative lug 26 and distally from the positive lug 34 to reduce mossing.

Although the entire upper edge may be pinched, it appears that a partial weld length of about 4 to 5 cm is adequate.  By pinching the edges of the open top of the sleeve 50 together, the gap that must be bridged by lead dendrites forming about the negative lug has been effectively lengthened, so that it will take them considerably longer to finally contact the adjacent positive plate, and thus prolong the life of the battery.

The separator 50 is also registered against the cross member 46 at location 56 by a tack weld to prevent any upward movement of the sleeve 50, though other securing methods may of course be used.

The sleeve welding operations may be conducted simultaneously or separately.    · ·  . They may be performed immediately after the sleeve 50 is positioned over the positive plate 14 by means of a heat sealing unit, a sonic or resistance welder or any other known welding device.

Besides the advantages of obviating mossing and separator creep, the use of a sleeve in accordance with the invention also alleviates problems, such as separator shifting, encountered during the handling of the plate prior to burning and nesting.

Although the invention has been described in relation to lead-acid batteries, it should be understood that it may be applied to other types of batteries.

## Claims

1. An electric storage battery plate (14) enveloped by a separator (50) in the form of a sleeve, characterised in that at least part of the top of the sleeve is pinched together immediately above the top of the plate.

2. A battery plate according to claim 1 in which the pinching is effected by pinch welding (58).

3. A battery plate according to claim 1 or claim 2 in which the separator is permanently registered against the plate to prevent upward creep.

4. A battery plate according to claim 3 in which the separator is registered against the plate by tack welding to a lower cross-member (46) of the plate.

5. A lead-acid battery in which the positive plates (14) are in accordance with any preceding claim and the tops of the separator sleeves are pinched together adjacent the lugs (26) at the top of the negative plates (12).

6. A lead-acid battery according to claim 5 in which the positive plates are of tubular construction.

0074831